# EUROPEAN PATENT APPLICATION

(11) **EP 4 848 154 A1**
(43) Date of publication of application: **02.12.2026**
(21) Application number: 25179913.6
(22) Date of filing: 30.05.2025
(51) Int. Cl.: G06N 10/20, G06N 10/60

(54) **METHODS AND SYSTEMS OF SAMPLING DYNAMICS OF A QUANTUM SYSTEM**

(71) Applicant: Max-Planck-Gesellschaft zur Förderung der Wissenschaften e.V., 80539 München (DE)
(72) Inventor: GEMSHEIM, Sebastian, 04279 Leipzig (DE); FRITZSCH, Felix, 01219 Dresden (DE)
(74) Representative: Hoffmann Eitle

(57) **Abstract**

A method of sampling dynamics of a quantum system represented by a time-independent system Hamiltonian *H_{S}* and a system interaction Hamiltonian *W* by using a quantum clock represented by a time-independent clock Hamiltonian *H_{C},* the method comprising the steps of: selecting a global interaction Hamiltonian *V* between the quantum system and the quantum clock such that an effective system interaction Hamiltonian *V_{S}* thereof coincides with the system interaction Hamiltonian *W*; determining an approximate energy eigenstate of a global quantum system comprising the quantum system and the quantum clock, the global quantum system being represented by the time-independent system Hamiltonian *H_{S}*, the time-independent clock Hamiltonian *H_{C},* and the global interaction Hamiltonian *V*; and sampling the dynamics of the quantum system by repeatedly preparing the global quantum system in the approximate energy eigenstate and performing measurements on the quantum clock.

## Description

### Technical field

The present disclosure relates to methods and systems of sampling dynamics of a quantum system, in particular to sampling dynamics of a quantum system represented by a time-independent system Hamiltonian ***H_{S}*** and a system interaction Hamiltonian ***W*** by using a quantum clock represented by a time-independent clock Hamiltonian ***H_{C}**.*

### Background

In the technical field of quantum simulation, but also quantum computing, which can be seen as a specific type of quantum simulation, one established approach is to map the system of interest onto a (controllable) quantum system in which the dynamics of the system of interest is simulated by approximating these dynamics using a serial implementation of short-time propagators. In other words, the full duration of the quantum simulation is split into a plurality of short time intervals and in each time interval the full dynamics are replaced by approximate dynamics for this time interval.

In this approach, high accuracy of the quantum simulation is typically striven for by selecting short time intervals such that the discrepancy between the full dynamics and the simulated, approximate dynamics can be kept small. This as well as the desire to simulate long time dynamics requires long coherence times of the underlying quantum system.

However, quantum technology available in the current noisy intermediate-scale quantum (NISQ) era is generally rather limited in terms of coherence times such that this requirement represents an intrinsic bottleneck to quantum simulations using these conventional approaches.

Hence, there is a need for methods and systems of sampling dynamics of a quantum system that allow sampling long time dynamics and/or with high accuracy without being strained by the requirement for long coherence times.

### Summary

The present disclosure has been made in view of the above technical limitations of currently existing techniques for sampling dynamics of quantum systems and thus provides methods and systems of sampling dynamics of a quantum system that allow for sampling long time dynamics and/or with high accuracy without being limited by the requirement for long coherence times.

According to an aspect of the present disclosure, a method of sampling dynamics of a quantum system represented by a time-independent system Hamiltonian ***H_{S}*** and a system interaction Hamiltonian ***W*** by using a quantum clock represented by a time-independent clock Hamiltonian ***H_{C}*** is provided, the method comprising the steps of: selecting a global interaction Hamiltonian ***V*** between the quantum system and the quantum clock such that an effective system interaction Hamiltonian ***V_{S}*** thereof coincides with the system interaction Hamiltonian ***W;*** determining an approximate energy eigenstate of a global quantum system comprising the quantum system and the quantum clock, the global quantum system being represented by the time-independent system Hamiltonian ***H_{S}***, the time-independent clock Hamiltonian ***H_{C}**,* and the global interaction Hamiltonian ***V;*** and sampling the dynamics of the quantum system by repeatedly preparing the global quantum system in the approximate energy eigenstate and performing measurements on the quantum clock.

According to a further aspect of the present disclosure, a system comprising a quantum computer and a classical computer is provided, the system configured to sample dynamics of a quantum system represented by a time-independent system Hamiltonian ***H_{S}*** and a system interaction Hamiltonian ***W*** by using a quantum clock represented by a time-independent clock Hamiltonian ***H_{C}**,* wherein the classical computer is configured to select a global interaction Hamiltonian ***V*** between the quantum system and the quantum clock such that an effective system interaction Hamiltonian ***V_{S}*** thereof coincides with the system interaction Hamiltonian ***W;*** the system is configured to determine an approximate energy eigenstate of a global quantum system comprising the quantum system and the quantum clock, the global quantum system being represented by the time-independent system Hamiltonian ***H_{S}***, the time-independent clock Hamiltonian ***H_{C}**,* and the global interaction Hamiltonian ***V;*** and the quantum computer is configured to sample the dynamics of the quantum system by repeatedly preparing the global quantum system in the approximate energy eigenstate and performing measurements on the quantum clock.

In addition, preferred aspects of the present disclosure are defined in the dependent claims.

According to the invention, sampling of dynamics of a quantum system, in particular sampling of long time dynamics and/or with high accuracy without being strained by the requirement for long coherence times, is achieved.

### Brief description of the drawings

Embodiments of the present disclosure, which are presented for better understanding the inventive concepts, but which are not to be seen as limiting the disclosure, will be described with reference to the figures in which:
- Fig. 1: shows a flow chart of a method of sampling of dynamics of a quantum system according to the present disclosure;
- Fig. 2: shows a flow chart of aspects of a method of sampling of dynamics of a quantum system according to the present disclosure;
- Fig. 3: shows an illustration of a method sampling of dynamics of a quantum system according to the present disclosure;
- Fig. 4: shows an illustration of a method sampling of dynamics of a quantum system according to the present disclosure; and
- Fig. 5: shows a system of sampling of dynamics of a quantum system according to the present disclosure.

### Detailed description

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where a step must necessarily follow or precede another step due to some dependency. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

As the present disclosure relates to the technical field of quantum simulation and quantum computing, the following paragraphs will provide further details regarding the technology referred to and the terms used within this disclosure to facilitate the understanding of the present disclosure and the inventive concepts disclosed herein.

Quantum simulation can generally be understood as simulating a system (which requires for a faithful description the laws of quantum physics) of interest by engineering a (controlled) quantum system to implement the Hamiltonian describing this system of interest. Herein, "simulating a system" may refer to "simulating a system and its dynamics". In this way, assessing the dynamics of the (controlled) quantum system allows to infer information about the system of interest.

Applications of quantum simulations are vast, one of the more prominent being drug discovery. In this application the molecules being candidates for a new drug are simulated in the (controlled) quantum system to understand the suitability of the molecules without requiring to perform experiments on the molecules itself since the functionality of the molecules can be assessed sufficiently accurately with the model simulated in the (controlled) quantum system.

Further, various models of quantum computing, in particular adiabatic quantum computing but also quantum gate-based quantum computing, can be understood as implementing a specific Hamiltonian on a quantum system. Here, it is noted that any quantum gate can be understood as the system being subject to a Hamiltonian generating this quantum gate and thus a sequence of quantum gates can be seen as an appropriately synthesized Hamiltonian whose dynamics are studied.

Quantum computing can generally be understood as technically implemented computing based on or exploiting quantum mechanical phenomena. Under certain conditions, in particular at small scales, classical theories of physical matter have to be replaced by quantum theories. One core element of these theories is that physical matter exhibits properties of both particles and waves. Quantum computing is built on the fact that leveraging this behavior can lead to what is a called a "quantum advantage": For some calculations, there exist quantum algorithms that outperform classical algorithms, i.e., algorithms performed on a classical computer, by a substantial margin, in some cases even exponentially faster.

Similar considerations also apply to quantum simulation as simulating one quantum system by means of another can generally circumvent the difficulty of the exponential growth of classical comuptational resources with the size of the system when simulating a quantum system classically.

As quantum computing originates in quantum physics, but relates to the field of computer technology, there is a need for a model or representation to bring quantum physics and computer technology together. The model currently most established is a model based on the classical circuit model. In the (classical) circuit model, a (classical) circuit is comprised of bits, having either the value 0 or the value 1, to which gates are applied. In the quantum model, each of these elements is replaced by its "quantum version".

The quantum version of the bit is the qubit (also referred to as quantum bit). It is, similar to a classical bit, a two-level (or two-state) system, however, a quantum-mechanical two-level system, possibly an effective two-level system. As a consequence of quantum physics, a qubit may be in any coherent superposition of both states 0 and 1 simultaneously.

A qubit or quantum bit may be considered as the basic unit of quantum information technology as well as the two-level quantum-mechanical system. It may refer to a physical qubit (that is, physically implemented qubit) and/or a logical qubit. In the present disclosure, this distinction may not necessarily be central and reference to "qubit" may be understood as reference to a physical qubit.

It is noted that these concepts can be transferred equally to quantum simulation, i.e., a qubit is a well-defined concept outside of quantum computing as well.

The fragile nature of quantum states leads to the possible computational advantage from quantum computing to be closely tied to a demanding engineering challenge as the quantum behavior of these states has to be preserved for a sufficient amount of time.

Due to the presence of noise disrupting the quantum behavior, the coherence time and thus the number of operations and the total time available for a quantum simulation are limited and as a consequence, despite growing qubit numbers, quantum simulation but also quantum computing has not yet shown the results theoretically possible with the known algorithms.

Using the above, the following describes embodiments of the present disclosure in detail.

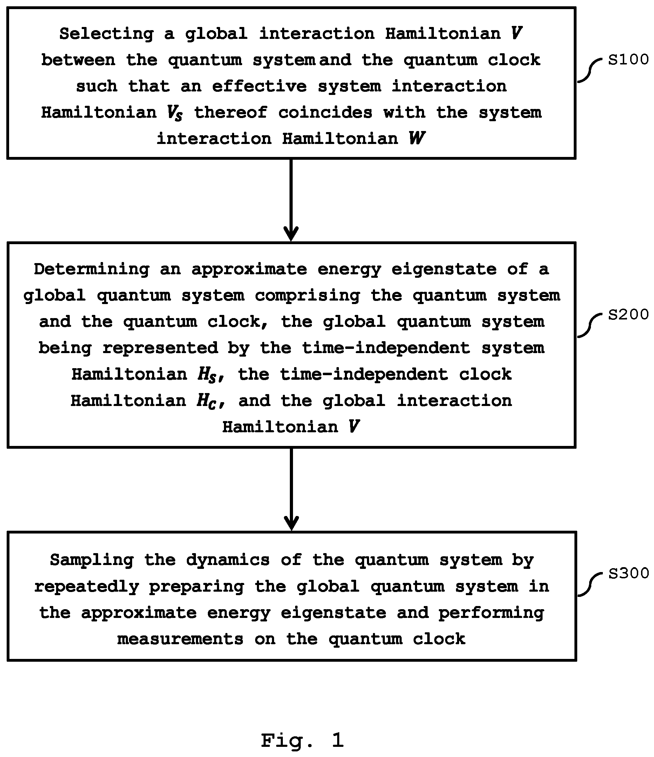

Fig. 1 shows a flow chart of a method of sampling of dynamics of a quantum system according to the present disclosure.

In more details, Fig. 1 shows a flow chart of a method of sampling dynamics of a quantum system represented by a time-independent system Hamiltonian ***H_{S}*** and a system interaction Hamiltonian W by using a quantum clock represented by a time-independent clock Hamiltonian ***H_{C}**.* The method comprises the steps of: selecting (step S100) a global interaction Hamiltonian ***V*** between the quantum system and the quantum clock such that an effective system interaction Hamiltonian ***V_{S}*** thereof coincides with the system interaction Hamiltonian ***W;*** determining (step S200) an approximate energy eigenstate of a global quantum system comprising the quantum system and the quantum clock, the global quantum system being represented by the time-independent system Hamiltonian ***H_{S}***, the time-independent clock Hamiltonian ***H_{C}**,* and the global interaction Hamiltonian ***V;*** and sampling (steps S300) the dynamics of the quantum system by repeatedly preparing the global quantum system in the approximate energy eigenstate and performing measurements on the quantum clock.

That is, according to methods of the present disclosure, the dynamics of a quantum system represented by a time-independent system Hamiltonian ***H_{S}*** and a system interaction Hamiltonian ***W,*** i.e., ***H_{S}*** + ***W**,* is sampled. The system interaction Hamiltonian ***W*** may be time-dependent ***W*** = ***W*(*t*)*.***

Instead of, as done in conventional methods, propagating the quantum system using small time propagators approximating the dynamics generated by ***H_{S} + W**,* methods of the present disclosure complement the quantum system with a quantum clock. By appropriate selection of the interaction, the global interaction Hamiltonian ***V,*** between quantum system and the quantum clock, an approximate energy eigenstate of the global quantum system comprising the quantum system and quantum clock includes all information about the dynamics of the quantum system. A measurement of the (highly entangled) global state on the quantum clock then transforms the state of the quantum system into a state corresponding to the dynamics up to the point in time corresponding to the measurement result on the quantum clock. This state can then either be measured or used for further manipulation.

While this measurement, given the laws of quantum mechanics, is probabilistic and thus the time up to which the quantum system is evolved cannot be selected deterministically, repeatedly preparing and measuring the global system allows to sample the complete dynamics of the quantum system.

That is, the dynamics are not obtained by means of concatenating approximate dynamics for short intervals but instead the measurements of the state of the quantum clock determine which corresponding state of the quantum state is obtained. The accuracy of the obtained dynamics does therefore not depend on the accuracy of the individual time-evolution steps of conventional approaches (since this is not performed) but rather on the accuracy of the approximate energy eigenstate and on the size of the quantum clock. Generally, the better the approximate energy eigenstate and/or the larger the quantum clock, the more accurate the sampling of the dynamics.

Conceptually, as a high-level description, this method can be understood as using the additional resources provided by the quantum clock to circumvent the bottleneck resulting from limited coherence times. In other words, the present invention enables a favorable trade-off between space resources (enlarging the total quantum system) and time resources (the limitations of NISQ era devices having limited coherence times). Consequently, the techniques according to the present disclosure may in particular be advantageous if space resources, such as the number of qubits, are not a limited resource while time resources, such as quality of qubits and resulting coherence times, are a limited resource.

In the following, further details regarding the individual steps of methods according to the present disclosure are provided.

Given the time-independent system Hamiltonian ***H_{S}***, the time-independent clock Hamiltonian ***H_{C}**,* and the global interaction Hamiltonian ***V,*** the global system Hamiltonian reads 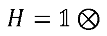 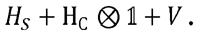 The global interaction Hamiltonian ***V*** may be time-independent.

By selecting, in step S100, the global interaction Hamiltonian ***V*** between the quantum system and the quantum clock such that an effective system interaction Hamiltonian ***V_{S}*** thereof coincides with the system interaction Hamiltonian ***W,*** it is ensured that the global interaction Hamiltonian V, when considering only the quantum system, induces the same dynamics as the interaction Hamiltonian ***W.***

In other words, the global system has, when considering only the quantum system, the same dynamics as the quantum system alone. More specifically, the relational dynamics induced by the global interaction Hamiltonian ***V*** gives rise to the same dynamics as the dynamics induced by the system interaction Hamiltonian ***W.***

Determining, in step S200, an approximate energy eigenstate can be done in various ways, some of which will be discussed in detail below. One such option is a variational quantum algorithm, see for example M. Cerezo et al., Nature Review Physics 3, 625-644 (2021). Another option is quantum imaginary time evolution and related concepts, see for example M. Motta et al., Nature Physics 16, 205-210 (2020).

Accordingly, the techniques according to the present disclosure are not limited to any specific technique how the approximate energy eigenstate is determined.

The state of the global quantum system may be denoted as **|Ψ〉〉,** while **|χ〉** may denote the state of the quantum clock. The exact dynamics of the quantum system may be described by the state **|ϕ(*t*)〉,** while the approximate dynamics of the quantum system obtained by sampling may be described by the state **|φ(*t*)〉.** Here, ***t*** may indicate the time.

It is further noted that the global state **|Ψ〉〉** is static, in particular for the case of the global interaction Hamiltonian ***V*** being time-independent.

Preparing the global state **|Ψ〉〉** as an approximate energy eigenstate of the global Hamiltonian ensures accurate relational dynamics, that is, that a measurement of the quantum clock leads the state of the quantum system to transform into the corresponding state indicating the dynamics up to the point in time corresponding to the measurement result of the measurement on the quantum clock.

These measurements performed in step S300 may be projective measurements.

The quantum system may comprise qubits. It may also consist of qubits. The quantum clock may comprise qubits. It may also consist of qubits. The global system may consist of the quantum system and the quantum clock.

In the following additional details of aspects of the present disclosure regarding the selection of the global interaction Hamiltonian ***V*** and the determination of the approximate energy eigenstate are provided.

In an aspect of the present disclosure, the global interaction Hamiltonian ***V*** may be selected to satisfy ***W =*** 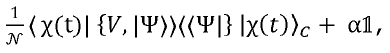 where 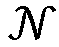 = 〈〈ψ| 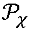 |ψ〉〉, 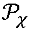 = |χ〉〈χ|_{c}, α is a scalar, **|Ψ〉〉** denotes, as mentioned also elsewhere, a state of the global quantum system, and **|χ〉** denotes, as mentioned also elsewhere, a state of the quantum clock.

Here, ·, · may denote the anticommutator defined as ***A,B = AB** + **BA.*** The scalar **α** may be time-dependent **α = α(t).** It is noted that this scalar may not be important as it induces merely a global phase, hence does not affect the system dynamics.

This formulation may be advantageous for accurately and easily selecting, in step S100, the global interaction Hamiltonian ***V*** between the quantum system and the quantum clock such that an effective system interaction Hamiltonian ***V_{S}*** thereof coincides with the system interaction Hamiltonian ***W.***

Specifically, while the above approach discussed in connection with Fig. 1 provides an exact solution of the sampled dynamics of the quantum system for a given interaction ***V,*** the further details discussed here provide a starting point how to select this interaction ***V*** in an appropriate manner.

In an aspect of the present disclosure, the system interaction Hamiltonian ***W*** may be time-dependent and may take the form ***W*(*t*) = Σ*ᵢfᵢ*(*t*)*Sᵢ,*** with ***Sᵢ*** being time-independent operators, and the global interaction Hamiltonian ***V*** may take the form **V = *Σᵢ* G*ᵢ* ⊗ *Sᵢ, Gᵢ*** satisfies ***gᵢ*(t)** = **〈χ(t)|G*ᵢ*|χ(t)〉*_{C}*,** and ***gᵢ*(*t*)** is an approximation of ***fᵢ*(*t*).**

The sum **Σ*ᵢfᵢ*(*t*)*Sᵢ*** may run over a single element.

The time dependent state **|χ(t)〉** may be obtained from an initial state of the quantum clock, **|χ(0)〉,** as **|χ(*****t)〉** =* ***e*^{*-itH*_{C}/*ℏ*}|χ(0)〉*.***

The functions ***gᵢ*** and ***fᵢ*** may be in (exact) agreement, that is, ***gᵢ = fᵢ.*** Further, ***gᵢ*** may be chosen as the Fourier polynomial of ***fᵢ*,** in which case this approximation may be the best approximation available.

These formulations may further be advantageous for accurately and easily selecting the global interaction Hamiltonian ***V,*** in particular since the form **W(*t*)** = **Σ*ᵢfᵢ*(*t*)*Sᵢ*** is quite general.

This approach has, among other, the advantage that the it does not dependent on the global state **|Ψ〉〉,** but instead depends only on the state **|χ(t)〉.** While it is entirely possible to implement techniques according to the present disclosure depending on the global state **|Ψ〉〉,** it may be a rather complicated endeavor to implement such a dependence, possibly precluding global states leading to equally acceptable solutions for the dynamics of the quantum system within a predetermined accuracy.

In an aspect of the present disclosure, the following relations may be satisfied: ${G}_{i} = \frac{{D}_{C}}{{T}_{0}} {\int }_{0}^{{T}_{0}} dt {h}^{\left(i\right)} \left(t\right) \left|χ\left(t\right)\right〉 \left〈χ\left(t\right)\right|$, and $\left〈χ\left(t\right)\right| {G}_{i} {\left|χ\left(t\right)\right〉}_{C} = {\sum }_{K = - \left({D}_{C}-1\right)}^{{D}_{C} - 1} \frac{{D}_{C} - \left|K\right|}{{D}_{C}} {h}_{K}^{\left(i\right)} {e}^{- i Ω t / ℏ}$*,* with ${h}_{K}^{\left(i\right)} =$ $\frac{1}{{T}_{0}} {\int }_{0}^{{T}_{0}} dt {e}^{i Ω t / ℏ} {h}^{\left(i\right)} \left(t\right)$, and ***D_{c}*** being a dimensionality of the quantum clock.

These terms may be understood as indicating that the functions are expressed in terms of a Fourier polynomial. This Fourier polynomial may also be referred to a truncated Fourier series or partial Fourier series.

The choice of a Fourier polynomial may in particular be advantageous in view of the dynamics of the global quantum system being periodic.

The frequency **Ω** may be referred to as the "natural frequency" or "frequency of intrinsic recurrence".

This may be understood as a specific implementation of the above concept. This approach is generic in the sense that it does not require or make use of special knowledge about either the interaction ***W*** or the spectral characteristics of the quanutm system. The latter would allow to a further constraint on the potentially possible dynamics. The proposed form gives a direct and simple way to find and implement appropriate operators ***Gᵢ*.**

It is noted that here the clock is assumed to be a truncated harmonic oscillator, giving, in some sense, the most unassuming spectral features and is able to mimic any other discrete spectrum.

In an aspect of the present disclosure, the following relations may be satisfied: *̅h̅*̅^{(*i*)} = 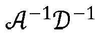 *̅f̅*̅^{(*i*)}*,* 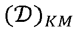 ***= Q_{T₁}*(*K - M*),** 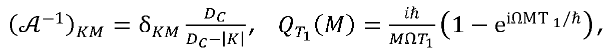 where the vector *̅h̅*̅^{(*i*)} may be defined as ${\vec{h}}^{\left(i\right)} = {\left\{{h}_{K}^{\left(i\right)}\right\}}_{K}$*,* the vector *̅f̅*̅^{(*i*)} may be defined as ${\vec{f}}^{\left(i\right)} = {\left\{{\int }_{0}^{{T}_{1}} dt {e}^{i Ω Mt / ℏ}{f}_{i}\left(t\right)/{T}_{1}\right\}}_{M}$, and ***T*₁** may be a predetermined determined time.

This may be seen an optimal choice of as an optimal choice for the functions ***h*^{(*i*)}(t).** Specifically, other choices would possibly not yield the desired relation ***W =*** 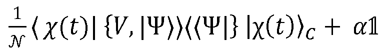 discussed above for which ***gᵢ*** is an approximation of ***fᵢ*** and has low variance.

This choice may in particular be obtained by choosing, without loss of generality, ${h}^{\left(i\right)} \left(t\right) = {\sum }_{K = - \left({D}_{C}-1\right)}^{{D}_{C} - 1} {h}_{K}^{\left(i\right)} {e}^{- i Ω t / ℏ}$ as the defining function for the operators **G*ᵢ*.** In this case, the coefficients ${h}_{K}^{\left(i\right)}$ are chosen such that ***gᵢ*(*t*) *=* 〈*χ*(*t*)|G*ᵢ*|χ(*t*)〉*_{C}*** corresponds to the functions ***fᵢ(t)*** on a predefined time domain **[0,*T*₁],** which define the original dynamical problem for the system.

One can then find a solution to this by minimizing ${\int }_{0}^{{T}_{1}} dt {\left[{g}_{i}\left(t\right)-{f}_{i}\left(t\right)\right]}^{2}$*,* which yields the system of equations ${\sum }_{K = - \left({D}_{C}-1\right)}^{{D}_{C} - 1} \frac{{D}_{C} - \left|K\right|}{{D}_{C}} {h}_{K}^{\left(i\right)} {Q}_{{T}_{1}} \left(K-M\right) = {\int }_{0}^{{T}_{1}} dt {e}^{i Ω Mt / ℏ} {f}_{i} \left(t\right) / {T}_{1}$*,* which leads to the above formulations.

In an aspect of the present disclosure, the time *T*₁ may be set as ***T*₁ *= T₀,*** and consequently one may obtain ${h}_{K}^{\left(i\right)} = \frac{{D}_{C}}{{D}_{C} - \left|K\right|} .$ $\frac{1}{{T}_{0}} {\int }_{0}^{{T}_{0}} dt {e}^{i Ω Kt} {f}_{i} \left(t\right)$. Alternatively, time ***T*₁** may be set as ***T*₁ *= T,*** i.e., the maximum time for sampling the dynamics.

Other methods for the determination of the global energy eigenstate may be employed, but these may require setting a predefined energy range in their algorithm. The usage of a variational quantum algorithm does not rely on such an initial parameter and may find any appropriate global eigenstate given sufficient expressability of the variational manifold.

In an aspect of the present disclosure, determining the approximate energy eigenstate may be based on a variational quantum algorithm using a variational ansatz **|Ψ(*θ*)〉〉 =** *U_{VQA}*(***θ***)|ψ*ᵢₙᵢₜ*〉〉, where **|Ψ*ᵢₙᵢₜ*〉〉** is an initial state of the global quantum system and ***U_{VQA}*(*θ*)** defines a unitary operation characterized by a parameter set ***θ***, and an optimal parameter set ***θ**** representing the approximate energy eigenstate may be obtained by minimizing a cost function **η** = $η \left(\sqrt{{\left(H-\left〈\left〈Ψ\left(θ\right)\right|H\left|Ψ\left(θ\right)\right〉\right〉\right)}^{2}}, \left.\left|Ψ\left(θ\right)\right〉\right〉\right)$, where **H** is a global system Hamiltonian

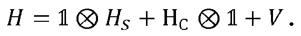

Here, the cost function **η** may be a real-valued function with at least the operator-valued argument $\sqrt{{\left(H-\left〈\left〈Ψ\left(θ\right)\right|H\left|Ψ\left(θ\right)\right〉\right〉\right)}^{2}}$ and/or the argument |ψ(*θ*)〉〉. This can be understood as the square root of the variance. Accordingly, the cost function η may be chosen as $η \left(\sqrt{{\left(H-\left〈\left〈Ψ\left(θ\right)\right|H\left|Ψ\left(θ\right)\right〉\right〉\right)}^{2}}\right) = {Var}_{Ψ \left(θ\right)} \left(H\right)$, i.e., η may be chosen to be the variance. Further, any power of this term $\sqrt{{\left(H-\left〈\left〈Ψ\left(θ\right)\right|H\left|Ψ\left(θ\right)\right〉\right〉\right)}^{2}}$ is an option as well. The term |Ψ(θ)〉〉 is added to the argument of the cost function to allow for further terms in the cost function ensuring the initial condition, as discussed in further detail below.

In an aspect of the present disclosure, the cost function **η** may contain a term proportional to 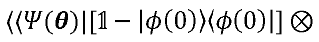 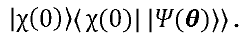 This term may ensure that the initial condition is met.

In an aspect of the present disclosure, the unitary operation may ***U_{VQA}*(*θ*)** satisfy **[P_{χ}(0)*,U_{VQA}*(*θ*)] *=* 0.** This criterion may ensure that the initial condition is met.

In an aspect of the present disclosure, the initial state of the global quantum system may satisfy |Ψ*ᵢₙᵢₜ*〉〉 ***=*** |*ϕ*(0)〉 ⊗ |χ*ᵢₙᵢₜ〉,* wherein |χᵢₙᵢₜ〉 may be a predetermined (or a predetermined, arbitrary) initial state.

In an aspect of the present disclosure, the cost function η may contain a term proportional to **〈〈Ψ(θ)|E|Ψ(θ)〉〉,** where ***E* =** $\frac{1}{T} {\int }_{0}^{T} dt {Q}_{χ} \left(t\right) {VP}_{χ} \left(t\right) {VQ}_{χ} \left(t\right)$, and 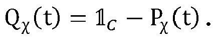 This term may assist in minimizing errors in the approximation.

For example, the cost function may take the form $η \left(\sqrt{{\left(H-\left〈\left〈Ψ\left(θ\right)\right|H\left|Ψ\left(θ\right)\right〉\right〉\right)}^{2}}\right) = {Var}_{Ψ \left(θ\right)} \left(H\right) + w \left〈\left〈Ψ\left(θ\right)\right|E\left|Ψ\left(θ\right)\right〉\right〉$, with w ≥ 0 being a freely tunable and/or predetermined weight. Such a cost function may be used to find a balance between minimizing the energy variance (achieved by the first term) and minimize errors of the dynamics (achieved by the second term). In other words, the choice of ***w,*** or in more general terms the presence of both terms, allows to strike a balance between the two sources of errors in sampling the dynamics according to the present disclosure.

In an aspect of the present disclosure, determining the approximate energy eigenstate may be based on an imaginary time evolution, a quantum Lanczos algorithm, a quantum algorithm for preparing quasi-stationary states, and/or a Krylov quantum diagonalization algorithm.

The quantum Lanczos algorithm is for example discussed in Motta et. al: "Determining eigenstates and thermal states on a quantum computer using quantum imaginary time evolution", Nature Physics 16, 205-210 (2020).

The quantum algorithm for preparing quasi-stationary states is for example discussed in Garrat and Choi: "Quantum Algorithm to Prepare Quasi-Stationary States", https://arxiv.org/abs/2407.07893.

The Krylov quantum diagonalization algorithm is for example discussed in Yoshika et al.: "Diagonalization of large many-body Hamiltonians on a quantum processor", https://arxiv.org/abs/2407.14431.

In other words, apart from variational quantum algorithms such as the one discussed above, there are various options available for determining the approximate energy eigenstate and hence the techniques according to the present disclosure are not limited to any of the above discussed methods.

In fact, it is rather the recognition that preparing the global system in an approximate energy eigenstate allows to sample to dynamics of the quantum system by measuring the quantum clock that is relevant for techniques according to the present disclosure than the specific means how this approximate energy eigenstate is determined.

Nevertheless, the above considerations, in particular in connection with the variational quantum algorithm, represent an advantageous possibility on how the determination of approximate energy eigenstate can be implemented.

In an aspect of the present disclosure, a maximum time for sampling the dynamics ***T*** satisfies the inequality ***ℏ*⁻²*·T*²*· Var*_{ψ(*θ*)}(*H*)** « ε², where ε is a predetermined value.

This condition may define a condition for which the relational dynamics, i.e., the circumstance that the measurement on the quantum clock leads to the correct state of the quantum state associated with the quantum clock measurement result, coincide with the exact result.

Here, the time ***T*** may be the time ***T*₀** introduced above. Further, ε may be an empirical value.

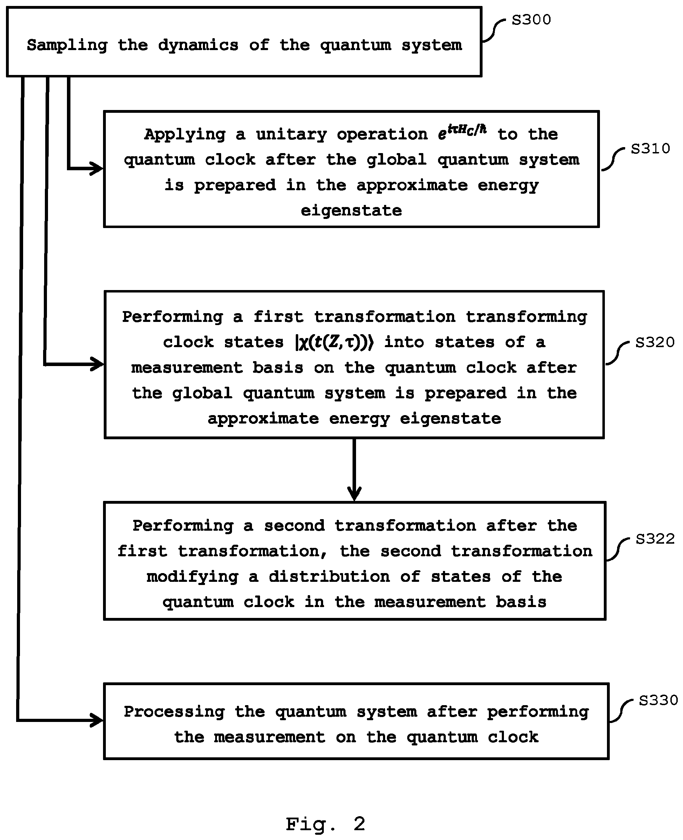

Fig. 2 shows a flow chart of aspects of a method of sampling of dynamics of a quantum system according to the present disclosure.

Fig. 2 shows various further details how sampling of the dynamics of the quantum system according to the present disclosure. It is noted that these details may be combined as appropriate but are not necessarily tied to each other.

Specifically, in an aspect of the present disclosure, sampling (step S300) the dynamics of the quantum system further may include applying (step S310) a unitary operation *e*^{*i*τ*H*_{C}/*ℏ*} to the quantum clock after the global quantum system is prepared in the approximate energy eigenstate.

This operation can be understood in view of the following: As a result of the measurement on the quantum clock, the quantum clock is in a specific state representing a specific time ***t*** within the sampled time interval **[0,T].** Given that the quantum clock can be assumed to be a finite-dimensional system, in particular if it is implemented using qubits, there is a finite number of measurement outcomes, which in turn leads to sampling of the dynamics limited to a finite number of points in time of the time interval **[0,T].** In other words, sampling is "stroboscopic".

The above operation of applying a unitary operation *e*^{*i*τ*H*_{C}/*ℏ*} to the quantum clock shifts the time by **τ.** In this way, all points in time in the time interval **[0,T]** can be sampled. In other words, this operation can be understood as "advancing the clock by *τ*". Accordingly, **T** may be a predetermined value.

In an aspect of the present disclosure, sampling (steps S300) the dynamics of the quantum system may further include performing (step S320) a first transformation transforming clock states **|χ(*t*(*Z*,τ))〉** into states of a measurement basis on the quantum clock after the global quantum system is prepared in the approximate energy eigenstate.

This first transformation may be a quantum Fourier transform (QFT). Transforming the state of the quantum clock into a state of the measurement basis of the quantum clock may simplify the association between the measurement result and the corresponding time ***t*** in the time interval **[0,T].**

In case that steps S310 and S320 are both performed, step S310 is performed first. In other words, the quantum clock is first transferred into the basis of its eigenstates representing "stroboscopic" points in time of the time interval **[0,T]** and then the quantum clock is advanced by T.

In an aspect of the present disclosure, sampling (step S300) the dynamics of the quantum system may further include performing (step S322) a second transformation after the first transformation, the second transformation modifying a distribution of states of the quantum clock in the measurement basis.

That is, since sampling the dynamics is a stochastic process, it is not possible to select a specific time but instead one has to sample according to the statistics of the quantum clock. By performing the second transformation these statistics (the distribution of states of the quantum clock) can be modified such that more favorable statistics are obtained.

More favorable statistics may be statistics in which all measurement outcomes are (approximately) equally likely. This may be preferrable if the goal is to sample dynamics of the quantum system for the entire time interval **[0,*T*]*.*** Alternatively, if in particular the later parts of the time interval **[0,*T*]** are of interest, the second transformation may be such that these states are more likely measurement outcomes.

If the clock Hamiltonian ***H_{C}*** can be written as ***H_{C} =* Σ*ₖωₖ*|*k*〉〈*k*|*,*** an example for the second transformation could be **exp*(*-Σ*ₖaₖ*|χ(*k*Δ*t*)〉〈χ(*k*Δ*t*)|)*,*** where the weights ***aₖ*** define which clock states are more likely to be measured.

In an aspect of the present disclosure, the measurement basis may be an eigen basis of the clock Hamiltonian ***H_{C}.***

Eigenstates of the clock Hamiltonian ***H_{C}*** may take the form **|*Z*),** that is, the time-independent clock Hamiltonian ***H_{C}*** may take the form ***H_{C}* = ΩΣ*_{z}Z*|*Z*〉〈*Z*|.** The sum may run over ***Z =*** 0 ***...D_{C} -* 1*,*** where ***D_{C}*** may be ***2^{N_{C}}*** and ***N_{C}*** may be the number of qubits used to implement the quantum clock. In other words, the quantum clock may be understood as finite *D_{C}*-dimensional quantum harmonic oscillator or a ***N_{C}*** qubit system. It is noted that this may also be understood as introducing a cut-off energy and limiting the the clock Hamiltonian ***H_{C}*** to this energy. In case of qubits, the integer ***Z*** is identified with the bit string encoding its binary representation.

The eigenvalue ***Z*** can be uniquely mapped onto a continuous time ***t* = *t*(*Z,τ*) = *Z*Δ*t+τ,*** where **T** is an offset that can be modified by single qubit rotations for the time-independent clock Hamiltonian ***H_{C}.***

In an aspect of the present disclosure the first transformation may be a quantum Fourier transformation, see also Muthukrishnan and Stroud Jr: "Quantum fast Fourier transform using multilevel atoms", https://arxiv.org/abs/quant-ph/0112017.

In an aspect of the present disclosure, sampling (step S300) the dynamics of the quantum system may further include processing (step S330) the quantum system after performing the measurement on the quantum clock.

This may in particular include further operations and/or measurements. That is, the present disclosure is not to be understood as being limited to sampling the dynamics of the quantum system. Rather, the quantum system may then be measured to obtain specific information about the quantum system and its dynamics or further operations, such as further dynamics, may be performed on the system.

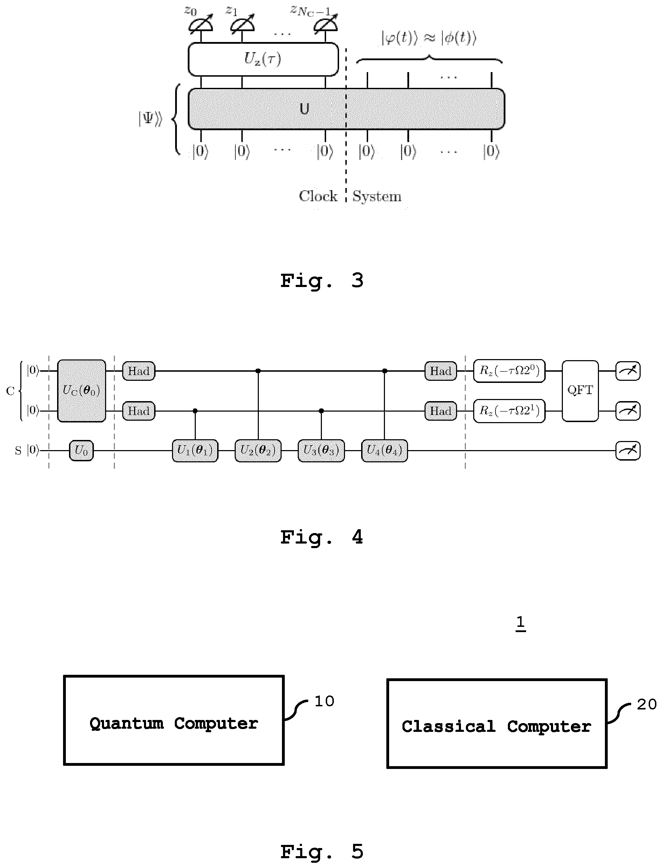

Fig. 3 shows an illustration of a method sampling of dynamics of a quantum system according to the present disclosure.

Specifically, Fig. 3 shows an implementation in which both the quantum system and the quantum clock are comprised of qubits, all prepared in the ground state |0〉. Further, in line with the above, the number of qubits of the quantum clock ***N_{C}*** scales only logarithmically with the duration of the sampling. Here, it emphasized that neither the choice of qubits as building blocks of the quantum system or of the quantum clock nor the relation between the dimensionality of the quantum clock and the duration of the sampling is limiting.

In line with the above, the state of the global quantum system **|Ψ〉〉** is prepared in an approximate energy eigenstate determined using, for example, a variational quantum algorithm in line with the above discussion. Further, it is emphasized that variational quantum algorithms are one among several options to determine the approximate energy eigenstate.

Next, a unitary operation ***U_{z}*(τ)** may be performed on the quantum clock, advancing the system by τ, also in line with the above.

Finally, a measurement of quantum clock is performed. The outcome of this measurement determines the time *t* = ***t*(*Z*,τ)** sampled by this iteration. In line with the above, repeatedly preparing the global system and measuring the quantum clock allows to sample the dynamics of the quantum system.

Fig. 4 shows an illustration of a method sampling of dynamics of a quantum system according to the present disclosure. Fig. 4 can be understood as specific implementation of Fig. 3.

Here, the quantum clock is comprised of two qubits and the quantum system is comprised of a single qubit, each of the qubits again being prepared in the ground state **10).**

The subsequent operations illustrated in gray represent a possible implementation of the variational quantum algorithm for preparing the global quantum system **|Ψ〉〉** in an approximate energy eigenstate.

The two operations ***R_{z}*(-τΩ2⁰)** and ***R_{z}*(*-τΩ*2¹)** represent advancing the quantum clock by τ, while in addition to Fig. 3, this method also includes the QFT discussed above in connection with step S320.

Finally, the clock states are measured, thereby transferring the quantum system into the state corresponding to the measurement outcome. In Fig. 4, this state is then measured as well.

Fig. 5 shows a system of sampling of dynamics of a quantum system according to the present disclosure. Specifically, Fig. 5 shows a system 1 comprising a quantum computer 10 and a classical computer 20. The system 1 is configured to sample dynamics of a quantum system represented by a time-independent system Hamiltonian ***H_{S}*** and a system interaction Hamiltonian ***W*** by using a quantum clock represented by a time-independent clock Hamiltonian ***H_{C},*** wherein the classical computer 20 is configured to select a global interaction Hamiltonian ***V*** between the quantum system and the quantum clock such that an effective system interaction Hamiltonian ***V_{S}*** thereof coincides with the system interaction Hamiltonian ***W;*** the system 1 is configured to determine an approximate energy eigenstate of a global quantum system comprising the quantum system and the quantum clock, the global quantum system being represented by the time-independent system Hamiltonian ***H_{S}*,** the time-independent clock Hamiltonian ***H_{C},*** and the global interaction Hamiltonian V; and the quantum computer 10 is configured to sample the dynamics of the quantum system by repeatedly preparing the global quantum system in the approximate energy eigenstate and performing measurements on the quantum clock.

That is, the quantum computer 10 and the classical computer 20 in combination determine the approximate energy eigenstate of a global quantum system. Specifically, in the case of finding the parameter set **θ*,** the quantum computer is used to evaluate the cost function **η(θ),** while the classical computing provides the next guess for **θ.** This can be understood as a hybrid-quantum-classical algorithm.

In summary, the present invention provides methods and systems of sampling of dynamics of a quantum system, in particular sampling of long time dynamics and/or with high accuracy without being strained by the requirement for long coherence times.

These advantages can in particular be achieved since the step-by-step application of short time propagators can be avoided, and by enlarging the total quantum system, i.e., adding the quantum clock to the quantum system of interest such that a larger global quantum system is obtained, thereby circumventing the limitations of limited coherence time, which is in particular present in NISQ era devices.

## Claims

1. A method of sampling dynamics of a quantum system represented by a time-independent system Hamiltonian ***H_{S}*** and a system interaction Hamiltonian ***W*** by using a quantum clock represented by a time-independent clock Hamiltonian ***H_{C},*** the method comprising the steps of:
selecting a global interaction Hamiltonian ***V*** between the quantum system and the quantum clock such that an effective system interaction Hamiltonian ***V_{S}*** thereof coincides with the system interaction Hamiltonian ***W;***
determining an approximate energy eigenstate of a global quantum system comprising the quantum system and the quantum clock, the global quantum system being represented by the time-independent system Hamiltonian ***H_{S}*,** the time-independent clock Hamiltonian ***H_{C},*** and the global interaction Hamiltonian ***V;*** and
sampling the dynamics of the quantum system by repeatedly preparing the global quantum system in the approximate energy eigenstate and performing measurements on the quantum clock.

2. The method according to claim 1, wherein
the global interaction Hamiltonian ***V*** is selected to satisfy 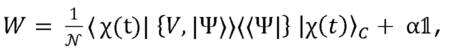 where 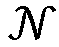 = 〈〈ψ| 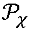 |ψ〉〉*,* 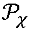 ***=* |χ〉〈χ|_{c},** α is a scalar, **|Ψ〉〉** denotes a state of the global quantum system, and **|χ〉** denotes a state of the quantum clock.

3. The method according to claim 1 or 2, wherein
the system interaction Hamiltonian ***W*** is time-dependent and takes the form ***W*(*t*) = Σ*ᵢfᵢ*(*t*)*Sᵢ,*** with ***Sᵢ*** being time-independent operators, and
the global interaction Hamiltonian ***V*** takes the form V = **Σ*ᵢ*G*i* ⊗ *Sᵢ, Gᵢ*** satisfies ***gᵢ*(*t*) *=*** 〈χ(t)|G*ᵢ*|χ(t)〉*_{C}*, and ***gᵢ*(*t*)** is an approximation of ***fᵢ*(*t*).**

4. The method according to claim 3, wherein ${G}_{i} = \frac{{D}_{C}}{{T}_{0}} {\int }_{0}^{{T}_{0}} dt {h}^{\left(i\right)} \left(t\right) \left|χ\left(t\right)\right〉 \left〈χ\left(t\right)\right| ,$ and $\left〈χ\left(t\right)\right| {G}_{i} {\left|χ\left(t\right)\right〉}_{C} = {\sum }_{K = - \left({D}_{C}-1\right)}^{{D}_{C} - 1} \frac{{D}_{C} - \left|K\right|}{{D}_{C}} {h}_{K}^{\left(i\right)} {e}^{- i Ω t / ℏ} ,$ with ${h}_{K}^{\left(i\right)} = \frac{1}{{T}_{0}} {\int }_{0}^{{T}_{0}} dt {e}^{i Ω t / ℏ} {h}^{\left(i\right)} \left(t\right)$*,* and *D_{C}* being a dimensionality of the quantum clock.

5. The method according to claim 4, wherein 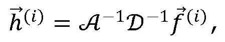
the vector *̅h̅*̅^{(*i*)} is defined as ${\vec{h}}^{\left(i\right)} = {\left\{{h}_{K}^{\left(i\right)}\right\}}_{K}$,
the vector *̅f̅*̅^{(*i*)} is defined as ${\vec{f}}^{\left(i\right)} = {\left\{{\int }_{0}^{{T}_{1}} dt {e}^{i Ω Mt / ℏ}{f}_{i}\left(t\right)/{T}_{1}\right\}}_{M}$*,* $\left(D\right) = {Q}_{{T}_{1}} \left(K-M\right) ,$ 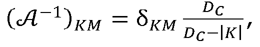 ${Q}_{{T}_{1}} \left(M\right) = \frac{iℏ}{M Ω {T}_{1}} \left(1-{e}^{iΩ {MT}_{1} / ℏ}\right) ,$ and
*T*₁ is a predetermined determined time.

6. The method according to claim 5, wherein ${T}_{1} = {T}_{0} ,$ and ${h}_{K}^{\left(i\right)} = \frac{{D}_{C}}{{D}_{C} - \left|K\right|} ⋅ \frac{1}{{T}_{0}} {\int }_{0}^{{T}_{0}} dt {e}^{i Ω Kt} {f}_{i} \left(t\right) .$

7. The method according to any one of claims 1 to 6, wherein
determining the approximate energy eigenstate is based on a variational quantum algorithm using a variational ansatz **|Ψ(*θ*)〉〉** ***=** U_{VQA}*(*θ*)|Ψ*ᵢₙᵢₜ*〉〉*,* where **|*Ψᵢₙᵢₜ〉〉*** is an initial state of the global quantum system and ***U_{VQA}*(*θ*)** defines a unitary operation **characterized by** a parameter set **θ,**
an optimal parameter set **θ*** representing the approximate energy eigenstate is obtained by minimizing a cost function $η = η \left(\sqrt{{\left(H-\left〈\left〈Ψ\left(θ\right)\right|H\left|Ψ\left(θ\right)\right〉\right〉\right)}^{2}}, \left.\left|Ψ\left(θ\right)\right〉\right〉\right)$, where ***H*** is a global system Hamiltonian 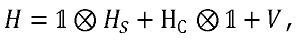 and
preferably the cost function η contains a term proportional to

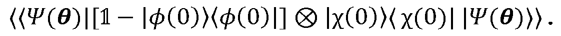

8. The method according to claim 7, wherein the unitary operation ***U_{VQA}*(*θ*)** satisfies **[P_{χ}(0)*, U_{VQA}*(*θ*)] =** 0*,* and the initial state of the global quantum system satisfies **|Ψᵢₙᵢₜ〉〉 *=* |*ϕ*(0)〉 ⊗ |χᵢₙᵢₜ〉,** wherein **|χᵢₙᵢₜ〉** is a predetermined initial state.

9. The method according to any one of claims 6 to 8, wherein the cost function η contains a term proportional to 〈**〈Ψ(*θ*)|E|Ψ(*θ*)〉〉,** where $E = \frac{1}{T} {\int }_{0}^{T} dt {Q}_{χ} \left(t\right) {VP}_{χ} \left(t\right) {VQ}_{χ} \left(t\right)$, and **Q_{χ}(t) *=***

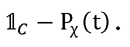

10. The method according to any one of claims 1 to 6, wherein
determining the approximate energy eigenstate is based on an imaginary time evolution, a quantum Lanczos algorithm, a quantum algorithm for preparing quasi-stationary states, and/or a Krylov quantum diagonalization algorithm.

11. The method according to any one of claims 1 to 10, wherein
a maximum time for sampling the dynamics **T** satisfies the inequality *ℏ*⁻² · ***T² · Var*_{*Ψ*(*θ*)}(*H*)** « ε*²,* where ε is a predetermined value,
and/or
sampling the dynamics of the quantum system further includes applying a unitary operation *e*^{*i*τ*H*_{C}/*ℏ*} to the quantum clock after the global quantum system is prepared in the approximate energy eigenstate.

12. The method according to any one of claims 1 to 11, wherein
sampling the dynamics of the quantum system further includes performing a first transformation transforming clock states **|χ(*t*(*Z*,τ))〉** into states of a measurement basis on the quantum clock after the global quantum system is prepared in the approximate energy eigenstate,
wherein preferably
sampling the dynamics of the quantum system further includes performing a second transformation after the first transformation, the second transformation modifying a distribution of states of the quantum clock in the measurement basis.

13. The method according to claim 12, wherein
the measurement basis may be an eigen basis of the clock Hamiltonian ***H_{C},*** and/or
the first transformation may be a quantum Fourier transformation.

14. The method according to any one of claims 1 to 13, wherein
sampling the dynamics of the quantum system further includes processing the quantum system after performing the measurement on the quantum clock.

15. A system comprising a quantum computer and a classical computer, the system configured to sample dynamics of a quantum system represented by a time-independent system Hamiltonian ***H_{S}*** and a system interaction Hamiltonian ***W*** by using a quantum clock represented by a time-independent clock Hamiltonian ***H_{C},*** wherein
the classical computer is configured to select a global interaction Hamiltonian ***V*** between the quantum system and the quantum clock such that an effective system interaction Hamiltonian ***V_{S}*** thereof coincides with the system interaction Hamiltonian ***W;***
the system is configured to determine an approximate energy eigenstate of a global quantum system comprising the quantum system and the quantum clock, the global quantum system being represented by the time-independent system Hamiltonian **H_{S},** the time-independent clock Hamiltonian **H_{C},** and the global interaction Hamiltonian **V;** and
the quantum computer is configured to sample the dynamics of the quantum system by repeatedly preparing the global quantum system in the approximate energy eigenstate and performing measurements on the quantum clock.
